# EUROPEAN PATENT SPECIFICATION

(11) **EP 1 341 851 B1**
(45) Date of publication and mention of the grant of the patent: **04.08.2004**
(21) Application number: 01967628.7
(22) Date of filing: 27.09.2001
(51) Int. Cl.: C09B 19/02

(54) **PROCESS FOR THE PREPARATION OF TRIPHENODIOXAZINE PIGMENTS**
VERFAHREN ZUR HERSTELLUNG VON TRIPHENDIOXAZINPIGMENTEN
PROCEDE DE PREPARATION DE PIGMENTS TRIPHENODIOXAZINIQUES

(30) Priority: 04.12.2000 GB 0029476
(43) Date of publication of application: 10.09.2003
(73) Proprietor: Clariant Finance (BVI) Limited, Road Town, Tortola (VG)
(72) Inventor: KAUL, Bansi, Lal, CH-4105 Biel-Benken (CH); PLÜG, Carsten, 64342 Seeheim-Jugenheim (DE)
(74) Representative: Dünnwald, Dieter
(86) International application number: PCT/IB2001/001785
(87) International publication number: WO 2002/046315

(56) References cited:
- EP-A- 0 199 056
- EP-A- 0 889 046
- DE-A- 4 442 291
- GB-A- 1 346 332
- US-A- 4 751 300
- DATABASE WPI Section Ch, Week 199617 Derwent Publications Ltd., London, GB; Class E23, AN 1996-167356 XP002184640 & JP 08 048905 A (NIPPON KAYAKU KK), 20 February 1996 (1996-02-20)
- DATABASE WPI Section Ch, Week 198334 Derwent Publications Ltd., London, GB; Class E23, AN 1983-743835 XP002184641 & JP 58 118855 A (NIPPON KAYAKU KK), 15 July 1983 (1983-07-15)
- DATABASE WPI Section Ch, Week 199608 Derwent Publications Ltd., London, GB; Class E23, AN 1996-075150 XP002184642 & JP 07 331098 A (NIPPON KAYAKU KK), 19 December 1995 (1995-12-19)
- DATABASE WPI Section Ch, Week 199313 Derwent Publications Ltd., London, GB; Class E23, AN 1993-104467 XP002184643 & JP 05 043808 A (NIPPON KAYAKU KK), 23 February 1993 (1993-02-23)

## Description

The invention relates to a particularly advantageous process for preparing triphenodioxazine compounds by oxidation in organic solvents, to the products obtained by such process and to their use as pigments.

Triphenodioxazine compounds and processes for their preparation are disclosed in GB 2284427 A, DE 4442291 A1 and DE 19727079 A1.

The process described in GB 2284427 A and DE 19727079 A1 starts from amino compounds, which are ortho-substituted by an alkoxy group and are obtainable only by way of a relatively complex synthesis. The pigments disclosed in GB 2284427 A are furthermore difficultly dispersible and cannot easily be brought into pigment form.

The process described in DE 4442291 A1 starts from unsubstituted intermediates i.e. amino compounds, which are easily obtainable. The pigment synthesis is performed with manganese dioxide in concentrated sulfuric acid and requires the isolation of intermediate products. That process forms considerable amounts of salts of the heavy metal manganese. The use of sulfuric acid requires a costly regeneration. In addition, an aftertreatment of the crude pigment in an organic solvent is often necessary to obtain the required pigment properties.

Another commonly used process for the preparation of triphenodioxazine compounds is the one described in USP 4,751,300 in which the intermediate 2,5-bisaryl-1,4-benzo-quinones are heated in the presence of inorganic acid in an inert non-polar organic solvent. This process is, however, not applicable to compounds with a heterocyclic ring containing an unsubstituted nitrogen atom.

The invention relates to a novel process to obtain triphenodioxazine pigments by oxidation of 2,5-bisarylamino-1,4-benzoquinones in polar, aprotic organic solvents. Very surprisingly, these pigments can be prepared in polar, aprotic solvents, but only in the presence of a base by means of various methods.

This process also avoids the isolation of 2,5-bisarylamino-1,4-benzoquinones and allows the preparation of triphenodioxazines directly from aromatic amines by subsequent condensation with 2,3,5,6-tetrachloro benzoquinone (chloranil) and oxidation of the resulting intermediate product in an organic solvent. The use of heavy metals is avoided or at least limited to catalytical quantities. The regeneration of polar organic solvents is a routine process in chemical plants.

With the obtained pigment It is possible to generate highly advantageous shifts in shades, which are of great interest. Moreover, the pigments obtained in this invention possess excellent dispersability, high color strength, high weather and light fastness, high saturation and outstanding heat stability in engineering plastics.

The present patent application provides a process for the preparation of compounds of the general formula (I) 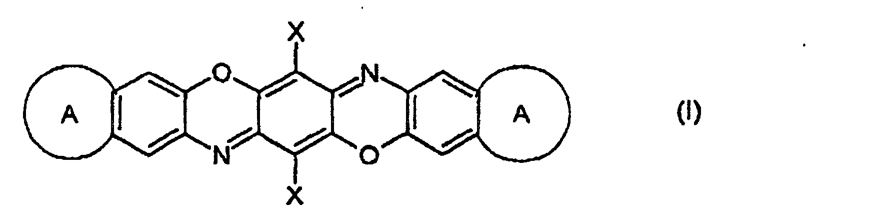 in which both X represent hydrogen or halogen atoms and the heterocyclic rings labeled A are fused on in 1,2-, 2,3- or 3,4- and 8,9-, 9,10- or 10,11- position and contain at least one nitrogen atom which is unsubstituted or substituted by alkyl, cycloalkyl or aryl radicals,
by oxidation of 2,5-bisarylamino-1,4-benzoquinones in polar, aprotic organic solvents in . the presence of a base.

In particular both X represent hydrogen or halogen atoms and the rings labeled A are fused on in 1,2-, 2,3- or 3,4- and 8,9-, 9,10- or 10,11- position and selected from the group consisting of the moieties (1) to (5) 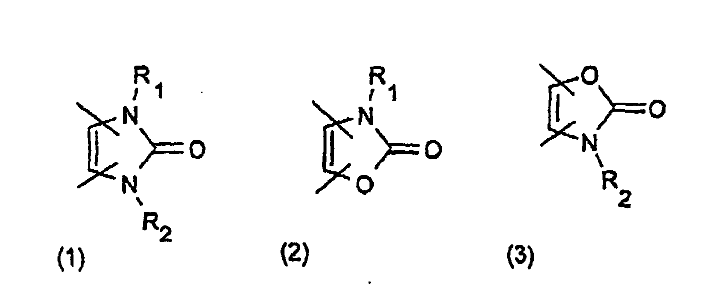 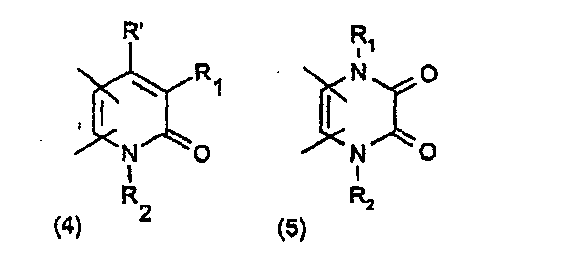 wherein R₁ and R₂ are, independently from each other, hydrogen, C₁₋₈alkyl, C₅₋₆ cycloalkyl, benzyl, benzanilide, phenyl or naphthyl whereby benzanilide, phenyl and naphthyl groups may be mono- or poly-substituted by radicals selected from the group halogen, nitro, C₁₋₈alkyl, C₅₋₆cycloalkyl, benzyl, phenyl or naphthyl, COOalkyl, C₁₋₃ alkoxy or trifluoromethyl and R' is, independently from R₁ and R₂, hydrogen, hydroxy, C₁₋₈alkyl, C₅₋₆ cycloalkyl, benzyl, benzanilide, phenyl or naphthyl whereby benzanilide, phenyl and naphthyl groups may be mono- or poly-substituted by radicals selected from the group halogen, nitro, C₁₋₈alkyl, C₅₋₆ cycloalkyl, benzyl, phenyl or naphthyl, COOalkyl, C₁₋₃alkoxy or trifluoromethyl, with the proviso that the pigment contains at least one unsubstituted NH-CO-group.

These compounds are particularly useful as pigments for coloring plastics mass including both solvent-free and solvent-containing masses of plastics or plastics resins. These include oil-based or aqueous paint systems and lacquers of various kinds. These compounds are also suitable for spin coloring of viscose or cellulose acetate, for pigmenting of polyethylene, polystyrene, polyvinylchloride, rubber or artificial leather. They can also be used for printing graphic fabrics, for coloring paper masses, for coating of textiles or for any other pigment printing process. The resulting pigmentations have excellent fastness to heat, light and weathering and chemicals. The pigments retain good strength of color and have good application properties. In particular, they have good fastness to migration, blooming, overcoating and solvents.

Preferred compounds of formula (I) are those with formulae (Ia), (IIa), (IIIa) and (IIIb) 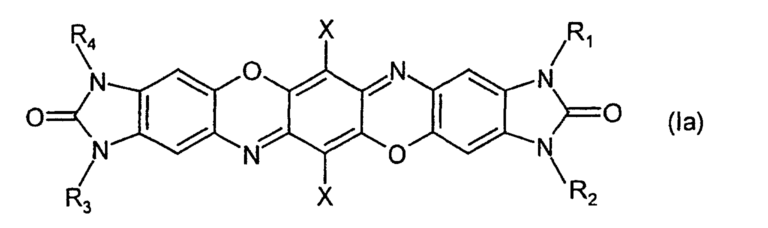 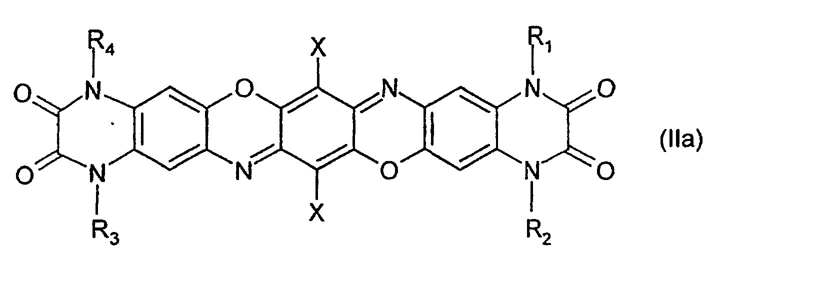 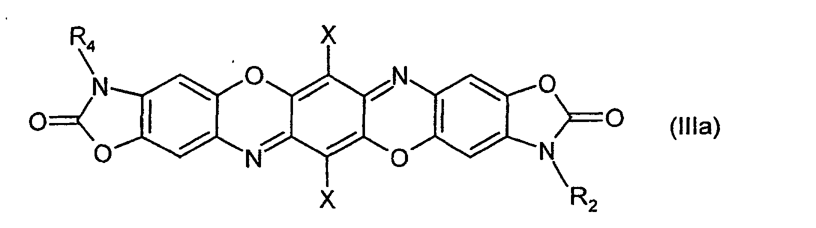 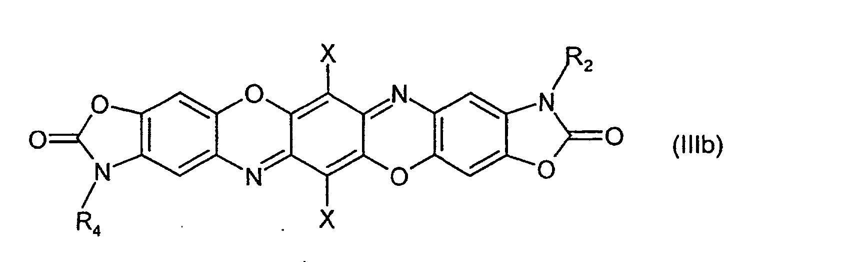 where X is hydrogen or halogen, R₁, R₂, R₃ and R₄, independently from one another, are hydrogen, a C₁₋₈ alkyl radical, a substituted or unsubstituted phenyl, benzyl, benzanilide or naphthyl radical, a substituted or unsubstituted C₅₋₆ cycloalkyl radical with the proviso that the pigment contains at least one unsubstituted NH-CO-group.

The substituents R₁, R₂, R₃ and R₄, independently from one another, are preferably hydrogen, methyl, ethyl, n- or i-propyl, n-, i-, sec- or tert-butyl, cyclohexyl, substituted or unsubstituted benzanilide, naphthyl, unsubstituted phenyl or phenyl substituted one or more times by radicals selected from the group consisting of halogen, preferably chlorine, nitro, C₁₋₈ alkyl radicals, preferably C₁₋₄ alkyl radicals, and C₁₋₈ alkoxy radicals with the abovementioned proviso.

The process of the invention is performed in polar, aprotic organic solvents, preferably dimethylformamide, dimethylsulfoxide, tetramethylurea, dimethylacetamide and N-methyl-pyrrolidone at temperatures from 0 - 200 °C, preferably 100 - 180 °C. The oxidation requires the presence of a base, preferably potassium carbonate, sodium carbonate, calcium carbonate or sodium phosphate and can be performed by various oxidation methods, preferably by introduction of air or oxygen, by sodium or potassium chlorate in the presence of vanadiumpentoxide or by sodium hypochlorite in the presence of manganese (III) complexes or by use of potassium or sodium peroxodisulfate.

The pigments formed by a process according to the invention are suitable for the mass pigmentation of suitable substrates including synthetic polymers, synthetic resins and regenerated fibers optionally in the presence of solvents. These substrates more particularly include oil, water and solvent based surface coatings, polyester spinning melts, polyethylene, polystyrene and polyvinyl chloride molding materials, rubber and synthetic leather. Furthermore, the pigments can be used in the manufacture of printing inks, for the mass coloration of paper and for coating and printing textiles.

The pigments obtained by the process according to this invention are also suitable as colorants in electrophotographic toners and developers, such as one- or two-component powder toners (also called one- or two-component developers), magnetic toners, liquid toners, polymerization toners and specialty toners (literature: L.B. Schein, "Electro-photography and Development Physics"; Springer Series in Electrophysics 14, Springer Verlag, 2^{nd} Edition, 1992).

Typical toner binders are addition polymerization, polyaddition and polycondensation resins, such as styrene, styrene-acrylate, styrene-butadiene, acrylate, polyester and phenol-epoxy resins, polysulphones, polyurethanes, individually or in combination, and also polyethylene and polypropylene, which may comprise further constituents, such as charge control agents, waxes or flow assistants, or may be modified subsequently with these additives.

The pigments formed by a process according to the invention are suitable, furthermore, as colorants in powders and powder coating materials, especially in triboelectrically or electrokinetically sprayable powder coating materials which are used for the surface coating of articles made, for example, from metal, wood, plastic, glass, ceramic, concrete, textile material, paper or rubber (J.F. Hughes, "Electrostatics Powder Coating" Research Studies, John Wiley & Sons, 1984).

Powder coating resins that are typically employed are epoxy resins, carboxyl- and hydroxyl-containing polyester resins, polyurethane resins and acrylic resins, together with customary hardeners. Combinations of resins are also used. For example, epoxy resins are frequently employed in combination with carboxyl- and hydroxyl-containing polyester resins. Typical hardener components (as a function of the resin system) are, for example, acid anhydrides, imidazoles and also dicyanodiamide and its derivatives, blocked isocyanates, bisacylurethanes, phenolic and melamine resins, triglycidyl isocyanurates, oxazolines and dicarboxylic acids.

In addition, pigments formed by a process according to the invention are suitable as colorants in ink-jet inks, both aqueous and non-aqueous, and in those inks, which operate in accordance with the hot-melt process.

When applied to the above-mentioned substrates the pigments are found to be resistant to migration and fast to light, and show fastness to washing, chlorite, hypochlorite and peroxide bleaching, rubbing, overspraying and solvents. Notably, the pigments display high tinctorial power, good opacity and good heat stability.

There now follows a series of examples which serves to illustrate the invention. One part by volume corresponds to the volume of one part by weight of water.

### EXAMPLE 1

### 6,14-Dichloro-3,11-diethyl-1,3,9,11-tetrahydro-diimidazo[4,5-b:4',5'-m]tripheno-dioxazine-2,10-dione

### a) 2,5-Dichloro-3,6-Bis(1-ethyl-2-oxo-1,3-dihydrobenzimidazol-5-yl)amino-1,4-benzo-quinone

90 parts of 5-amino-1-ethyl-1,3-dihydrobenzimidazol-2-one and 42 parts of anhydrous sodium hydrogencarbonate are suspended in 1000 parts of dimethylacetamide and the mixture is heated up to 70 °C. 62 parts of chloranil are added over 2 h. The mixture is heated under reflux for 1h, cooled down to 100 °C, filtered at 100 °C, washed with 1000 parts of hot dimethylacetamide and washed with water until free of chloride. Drying at 80 °C under reduced pressure yields 105 parts of a brown powder of the following formula 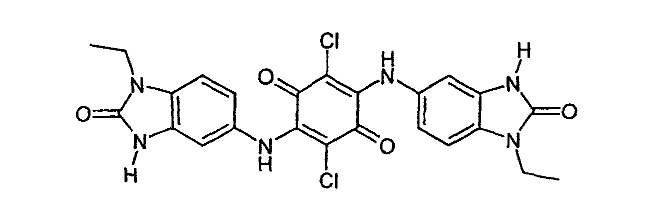 Mp > 300 °C

### b) 6,14-Dichloro-3,11-diethyl-1,3,9,11-tetrahydro-diimidazo[4,5-b:4',5'-m]tri-pheno-dioxazine-2,10-dione by oxidation with air

53 parts of 2,5-Dichloro-3,6-Bis(1-ethyl-2-oxo-1,3-dihydrobenzimidazol-5-yl)-amino-1,4-benzoquinone (as obtained in Example 1a) and 28 parts of potassium carbonate are suspended in 400 parts of dimethylacetamide and the mixture is heated up to reflux. Under inlet of air (ca. 50 l / h) the mixture is refluxed for 10 h, filtered at 100 °C, washed with 400 parts of hot dimethylacetamide and washed with water until free of chloride. Drying at 80 °C under reduced pressure yields 21 parts of a green-metallic powder of the following formula 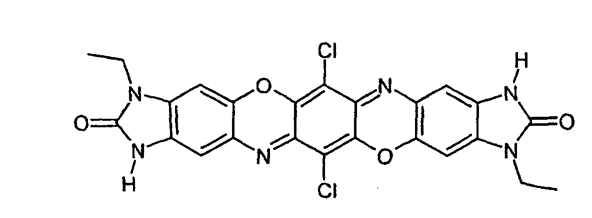 Mp > 300 °C

### EXAMPLE 2

### 6,14-Dichloro-3,11-diethyl-1,3,9,11-tetrahydro-diimidazo[4,5-b:4',5'-m]tripheno-di-oxazine-2,10-dione (condensation with chloranil and following oxidation)

90 parts of 5-amino-1-ethyl-1,3-dihydrobenzimidazol-2-one and 43 parts of anhydrous sodium hydrogencarbonate are suspended in 1000 parts of dimethylacetamide and the mixture is heated up to 70 °C. 62 parts of chloranil are added over 2 h. The mixture is heated under reflux for 1h, cooled down to 100 °C, treated with 40 parts of potassium carbonate and heated to reflux again. Under inlet of air (ca. 50 l / min) the mixture is refluxed for 10 h, filtered at 100 °C, washed with 1000 parts of hot dimethylacetamide and washed with water until free of chloride. Drying at 80 °C under reduced pressure yields 46 parts of a green-metallic powder identical with the material obtained in example 1b).
Mp > 300 °C

### EXAMPLE 3

### 6,14-Dichloro-3,11-diethyl-1,3,9,11-tetrahydro-diimidazo[4,5-b:4',5'-m]tripheno-di-oxazine-2,10-dione (oxidation with sodium chlorate)

53 parts of 2,5-Dichloro-3,6-Bis(1-ethyl-2-oxo-1,3-dihydrobenzimidazol-5-yl)amino-1,4-benzoquinone (as obtained in Example 1a), 0.5 parts of vanadium pentoxide and 28 parts of potassium carbonate are suspended in 400 parts of dimethylacetamide and the mixture is heated up to 100 °C. At that temperature the mixture is treated with 21 parts of sodium chlorate during 2h, subsequently heated to reflux for 12 h, filtered at 100 °C, washed with 400 parts of hot dimethylacetamide and washed with water until free of chloride. Drying at 80 °C under reduced pressure yields 41 parts of a green-metallic powder, identical with that material obtained in example 1b.
Mp > 300 °C

The violet to blue pigment so obtained show excellent pigment properties like dispersibility, color strength, excellent heat and light stability when applied in engineering plastics or coatings.

### EXAMPLE 4

### Oxidation with potassium peroxodisulfate

### a) 6,14-Dichloro-3,11-diethyl-1,3,9,11-tetrahydro-diimidazo[4,5-b:4',5'-m]tripheno-di-oxazine-2,10-dione

1 equimol of 2,5-Dichloro-3,6-Bis(1-ethyl-2-oxo-1,3-dihydrobenzimidazol-5-yl)-amino-1,4-benzoquinone (as obtained in Example 1a), 1 equimol of potassium carbonate are suspended in 25 equimols of N-methylpyrrolidone and the mixture is heated up to 120 °C. At that temperature the mixture is treated with 2.5 equimols of potassium peroxodisulfate during 5 min, subsequently heated to 160 °C for 12 h, filtered at 100 °C, washed with 25 equimols of hot N-methylpyrrolidone and washed with water until free of sulfate. Drying at 80 °C under reduced pressure yields ca. 20-30 % of a green-metallic powder, identical with that material obtained in example 1b.

The same procedure is applied to obtain the following examples:

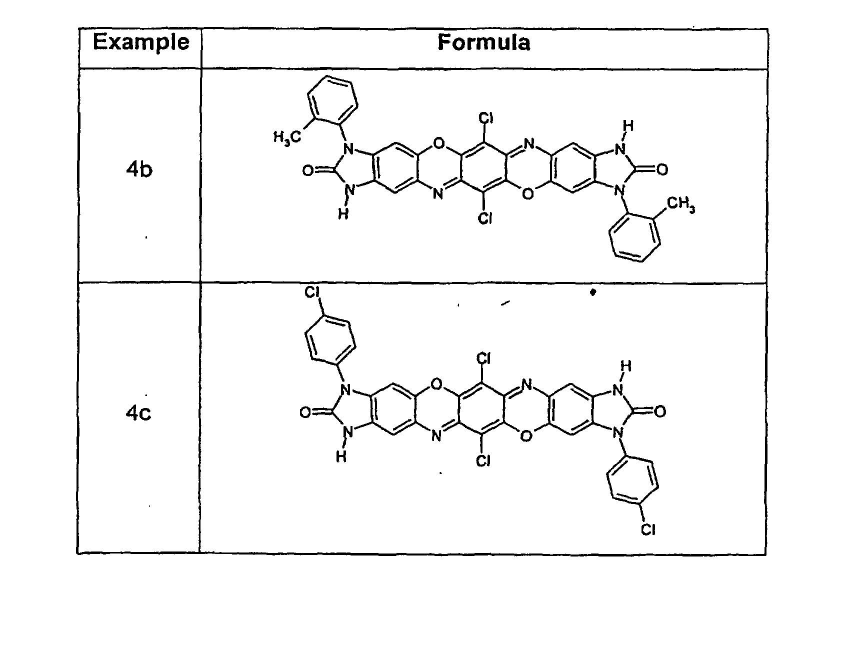

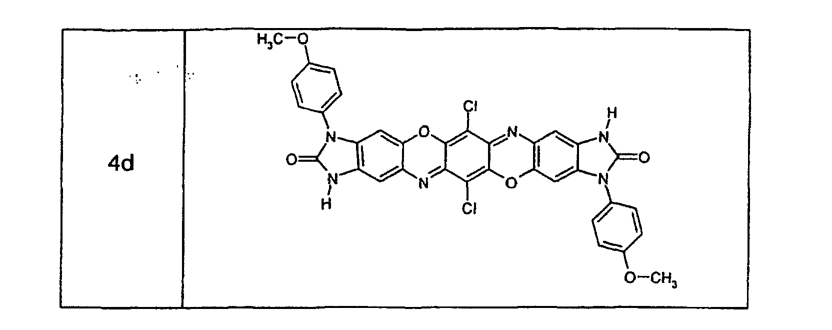

### USE EXAMPLES

The pigment obtained in example 1a was milled in water in a PML mill (Drais Werke Mannheim) for 20 min with zirconia beads, filtered and dried in vacuum before subjected to application.

### APPLICATION IN PVC MASSTONE

The preparation of a 1 % colored PVC sheet is performed following the procedure: 100 parts of clear PVC are mixed with 0.1 part of pigment for 2 minutes. The mixture is passed between two rollers for 5 minutes, the front roller being heated at 130 °C and the rear roller being heated at 135 °C. Then the sheet is pressed under a pressure of 25 tones between two chromium-plated steel plates heated at 165 °C, for 5 minutes. The pressed sheet is colored with a reddish blue shade.

### APPLICATION IN PVC WHITE

The preparation of a 0.1 % colored PVC sheet is performed following the procedure: 100 g of PVC-white (0.5 % TiO₂) are mixed with 0.1 g of pigment for 2 minutes. The mixture is passed between two rollers for 8 minutes, the front roller being heated at 160 °C and the rear roller being heated at 165 °C. Then the sheet is pressed under a pressure of 25 tones between two chromium-plated steel plates heated at 160 °C, for 5 minutes to obtain a reddish-blue shade.

### APPLICATION IN LACQUERS MASSTONE

The preparation of the alkydmelamine (AM5) resin coating is performed following the procedure: 3.6 g of pigment, 26.4 g of clear AM5 (35 %) and 85 g of glass beads are stirred in a Skandex stirrer for 30 minutes. 30 g of this preparation are mixed with 60 g of clear AM5 (55.8 %). The dispersion is sprayed on a cardboard sheet, air-dried for 15 minutes and baked at 140 °C in an oven for 30 minutes to obtain a reddish-blue shade.

### APPLICATION IN LACQUERS WHITE

The preparation of the alkydmelamine (AM5) resin coating is performed following the procedure:
3.6 g of pigment, 26.4 g of clear AM5 (35 %) and 85 g of glass beads are stirred in a Skandex stirrer for 30 minutes. 7.5 g of this preparation are mixed with 20 g of AM5-white (30 % TiO₂). The dispersion is sprayed on a cardboard sheet, air-dried for 15 minutes and baked at 140 °C in an oven for 30 minutes to obtain a reddish-blue shade.

## Claims

1. A process for the preparation of triphenodioxazine pigments of the general formula (I) 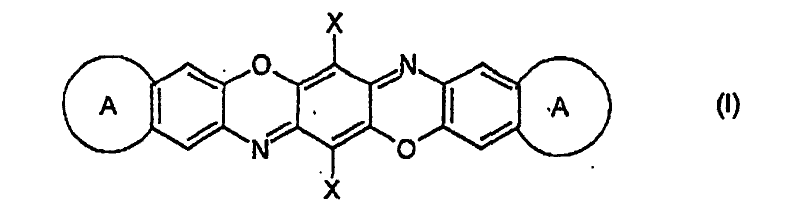 in which both X represent hydrogen or halogen atoms and the rings labeled A are fused on in 1,2-, 2,3- or 3,4- and 8,9-, 9,10- or 10,11- position and are selected from the group consisting of the moieties (1) to (5) 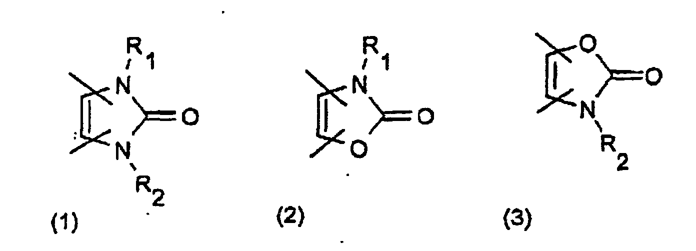 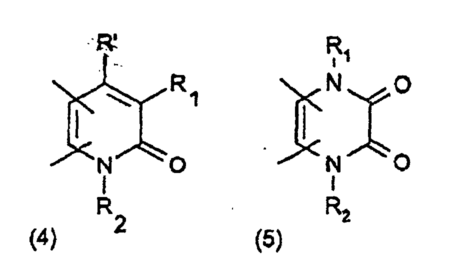 wherein R₁ and R₂ are, independently from each other, hydrogen, C₁₋₈alkyl, C₅₋₆ cycloalkyl, benzyl, benzanilide, phenyl or naphthyl whereby benzanilide, phenyl and naphthyl groups may be mono- or poly-substituted by radicals selected from the group halogen, nitro, C₁₋₈alkyl, C₅₋₆cycloalkyl, benzyl, phenyl or naphthyl, COOalkyl, C₁₋₃ alkoxy or trifluoromethyl and R' is, independently from R₁ and R₂, hydrogen, hydroxy, C₁₋₈alkyl, C₅₋₆ cycloalkyl, benzyl, benzanilide, phenyl or naphthyl whereby benzanilide, phenyl and naphthyl groups may be mono- or poly-substituted by radicals selected from the group halogen, nitro, C₁₋₈alkyl, C₅₋ ₆cycloalkyl, benzyl, phenyl or naphthyl, COOalkyl, C₁₋₃alkoxy or trifluoromethyl, with the proviso that the pigment contains at least one unsubstituted NH-CO-group,
by oxidation of 2,5-bisarylamino-1,4-benzoquinones in polar, aprotic organic solvents in the presence of a base.

2. A process according to claim 1 in which compounds of formula (I) are those with formulae (Ia), (II a), (III a) and (IIIb) 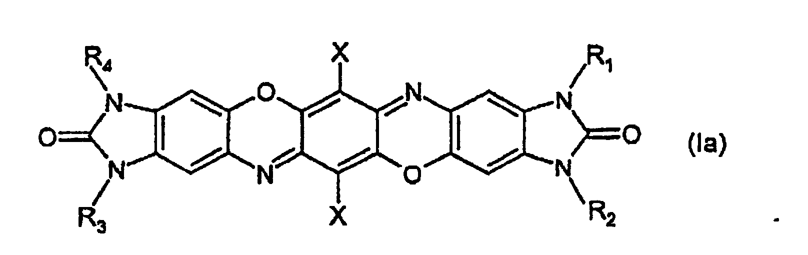 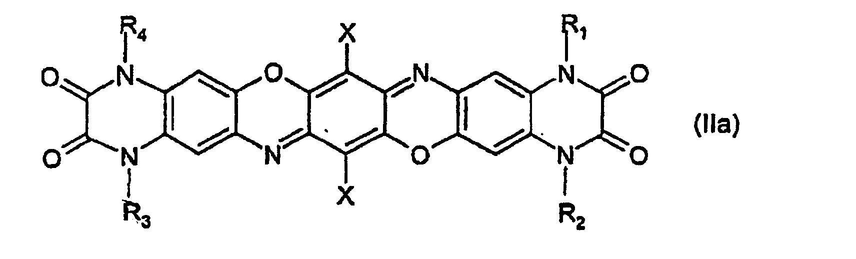 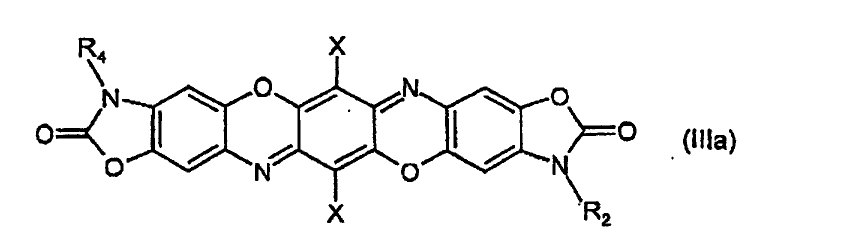 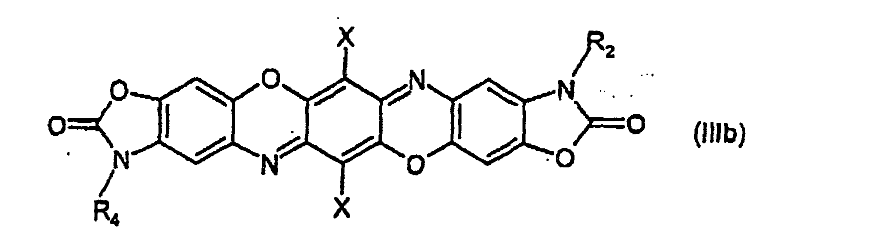 where X is hydrogen or halogen, R₁, R₂, R₃ and R₄, independently from one another, are hydrogen, a C₁₋₈ alkyl radical, a substituted or unsubstituted phenyl, benzyl, benzanilide or naphthyl radical, a substituted or unsubstituted C₅₋₆ cycloalkyl radical with the proviso that the pigment contains at least one unsubstituted NH-CO-group.

3. A process as defined In claim 1 comprising a condensation of arylamines with a benzoquinone and subsequent oxidation of the resulting intermediate in the presence of a base.

4. A process according to any one of claims 1-3 in which the organic solvent is dimethylformamide, dimethylsulfoxide, tetramethylurea, dimethylacetamide or N-methylpyrrolidone.

5. A process according to any one of claims 1-3 in which the oxidation is performed by introduction of air or oxygen, by sodium or potassium chlorate in the presence of vanadiumpentoxide or by sodium hypochlorite in the presence of manganese (III) complexes or by potassium or sodium peroxodisulfate.

## Patentansprüche

1. Verfahren zur Herstellung von Triphendioxazinpigmenten der allgemeinen Formel (I) 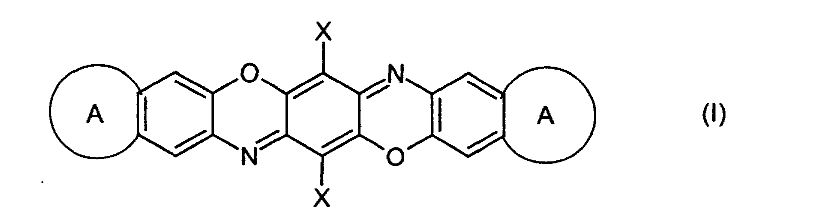 wobei beide X für Wasserstoff oder Halogenatome stehen und die mit A bezeichneten Kerne in 1,2-, 2,3- oder 3,4- bzw. 8,9-, 9,10- oder 10,11-Stellung ankondensiert sind und unter den Gruppierungen (1) bis (5) 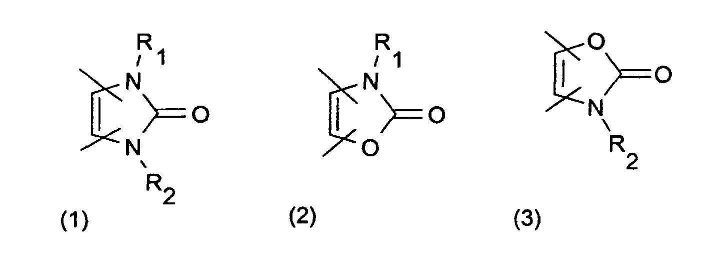 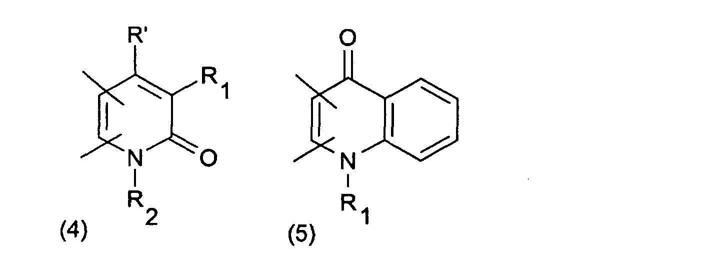 ausgewählt sind, wobei R₁ und R₂ unabhängig voneinander für Wasserstoff, C₁₋₈-Alkyl, C₅₋₆-Cycloalkyl, Benzyl, eine gegebenenfalls durch Reste aus der Gruppe Halogen, Nitro, C₁₋₈-Alkyl, C₅₋₆-Cycloalkyl, Benzyl, Phenyl oder Naphthyl ein- oder mehrfach substituierte Benzanilid-, Phenyl- oder Naphthylgruppe, COO-Alkyl, C₁₋ ₃-Alkoxy oder Trifluormethyl stehen und R' unabhängig von R₁ und R₂ Wasserstoff, Hydroxy, C₁₋₈-Alkyl, C₅₋₆-Cycloalkyl, Benzyl, ein gegebenenfalls durch Reste aus der Gruppe Halogen, Nitro, C₁₋₈-Alkyl, C₅₋₆-Cycloalkyl, Benzyl, Phenyl oder Naphthyl ein- oder mehrfach substituierte Benzanilid-, Phenyl- oder Naphthylgruppe, COO-Alkyl, C₁₋₃-Alkoxy oder Trifluormethyl bedeutet, mit der Massgabe, dass das Pigment mindestens eine unsubstituierte NH-CO-Gruppe enthält,
durch Oxidation von 2,5-Bisarylamino-1,4-benzochinonen in polaren aprotischen organischen Lösungsmitteln in Gegenwart einer Base.

2. Verfahren nach Anspruch 1, bei dem man als Verbindungen der Formel (I) solche der Formeln (la), (IIa), (IIIa) und (IIIb) 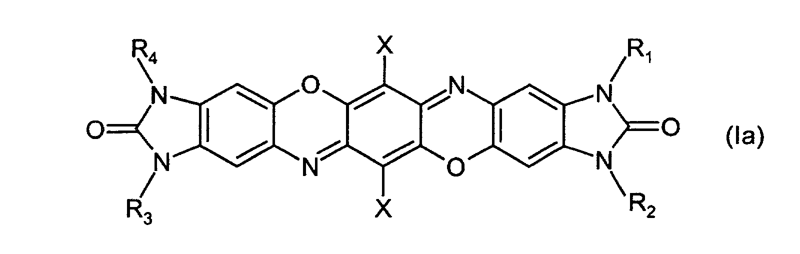 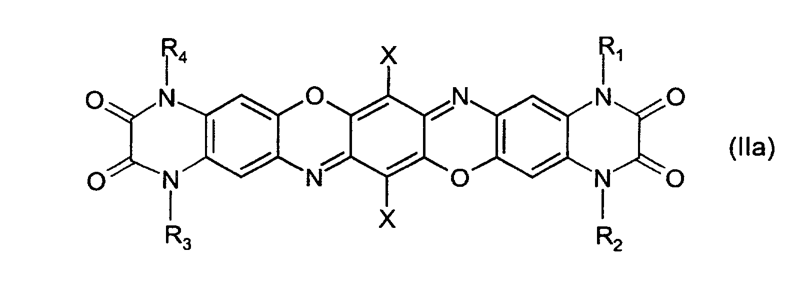 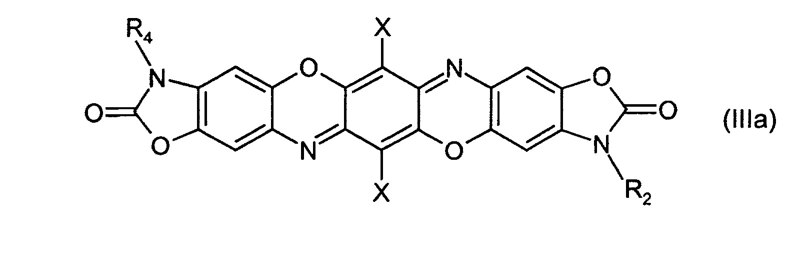 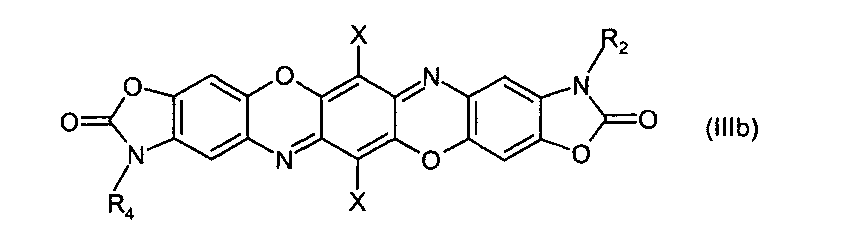 wobei X für Wasserstoff oder Halogen, R₁, R₂, R₃ und R₄ unabhängig voneinander für Wasserstoff, einen C₁₋₈-Alkylrest, einen gegebenenfalls substituierten Phenyl-, Benzyl-, Benzanilid- oder Naphthylrest, einen gegebenenfalls substituierten C₅₋₆-Cycloalkylrest stehen, mit der Massgabe, dass das Pigment mindestens eine unsubstituierte NH-CO-Gruppe enthält, einsetzt.

3. Verfahren gemäss Anspruch 1, umfassend eine Kondensation von Arylaminen mit einem Benzochinon und anschliessende Oxidation des dabei entstandenen Zwischenprodukts in Gegenwart einer Base.

4. Verfahren nach einem der Ansprüche 1-3, bei dem man als organisches Lösungsmittel Dimethylformamid, Dimethylsulfoxid, Tetramethylharnstoff, Dimethylacetamid oder N-Methylpyrrolidon einsetzt.

5. Verfahren nach einem der Ansprüche 1-3, bei dem die Oxidation durch Einleitung von Luft oder Sauerstoff, durch Natrium- oder Kaliumchlorat in Gegenwart von Vanadinpentoxid oder durch Natriumhypochlorit in Gegenwart von Mangan(III)-Komplexen oder durch Kalium- oder Natriumperoxodisulfat erfolgt.

## Revendications

1. Procédé pour la préparation de pigments de triphénodioxazine de formule générale (I) 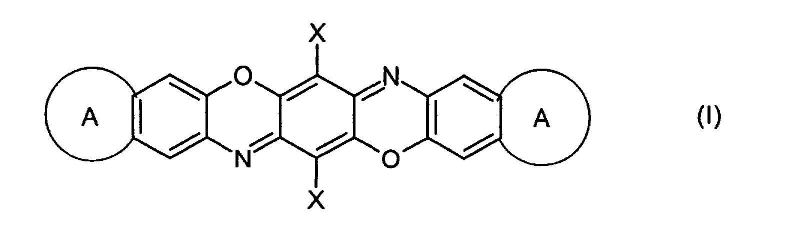 dans laquelle les deux X représentent des atomes d'hydrogène ou d'halogène et les hétérocycles marqués par A sont fusionnés dans les positions 1,2-, 2,3- ou 3,4- et 8,9-, 9,10- ou 10,11- et choisis dans le groupe constitué par les moitiés (1) à (5) 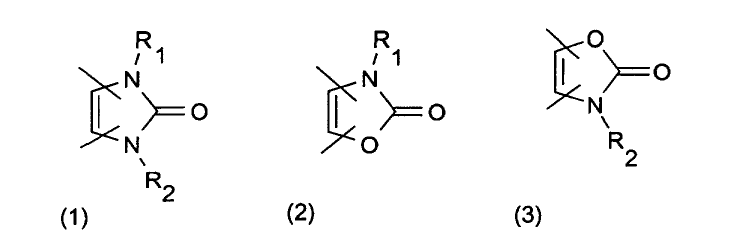 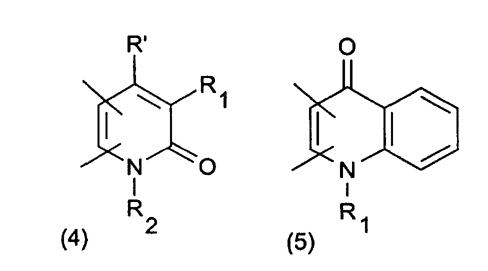 dans lesquelles R₁ et R₂ représentent, indépendamment l'un de l'autre, hydrogène, alkyle en C₁ à C₈, cycloalkyle en C₅ à C₆, benzyle, benzanilide, phényle ou naphtyle, les groupes benzanilide, phényle et naphtyle pouvant être monosubstitués ou polysubstitués par des radicaux choisis dans le groupe constitué par halogène, nitro, alkyle en C₁ à C₈, cycloalkyle en C₅ à C₆, benzyle, phényle ou naphtyle, COOalkyle, alcoxy en C₁ à C₃ ou trifluorométhyle et R' représente, indépendamment de R₁ et R₂, hydrogène, hydroxy, alkyle en C₁ à C₈, cycloalkyle en C₅ à C₆, benzyle, benzanilide, phényle ou naphtyle, les groupes benzanilide, phényle et naphtyle pouvant être monosubstitués ou polysubstitués par des radicaux choisis dans le groupe constitué par halogène, nitro, alkyle en C₁ à C₈, cycloalkyle en C₅ à C₆, benzyle, phényle ou naphtyle, COOalkyle, alcoxy en C₁ à C₃ ou trifluorométhyle, à condition que le pigment contienne au moins un groupe NH-CO non substitué,
par oxydation de 2,5-bisarylamino-1,4-benzoquinones dans des solvants organiques polaires aprotiques en présence d'une base.

2. Procédé selon la revendication 1, dans lequel les composés de formule (I) sont ceux présentant les formules (la), (IIa), (IIIa) et (IIIb) 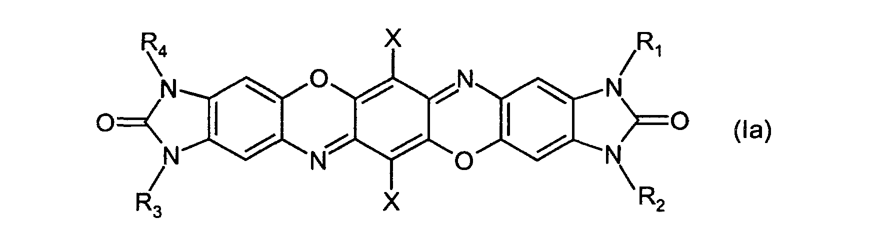 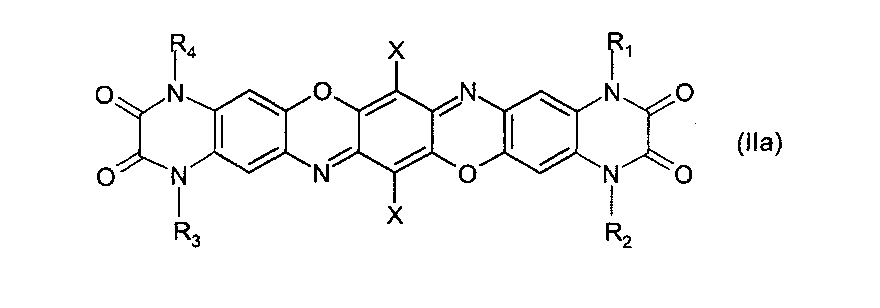 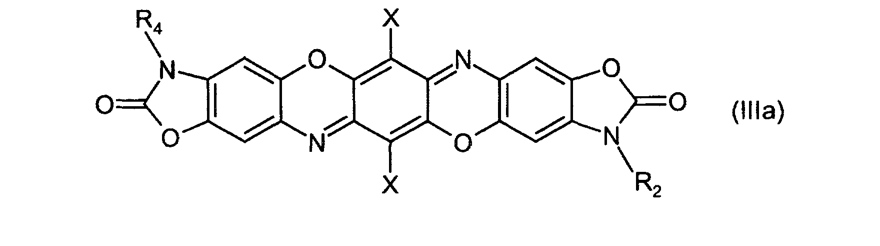 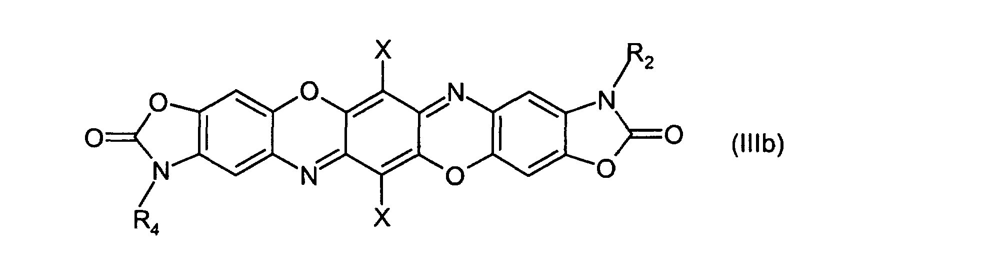 où X représente hydrogène ou halogène, R₁, R₂, R₃ et R₄ représentent, indépendamment l'un de l'autre, hydrogène, un radical alkyle en C₁ à C₈, un radical phényle, benzyle, benzanilide ou naphtyle substitué ou non substitué, un radical cycloalkyle en C₅ à C₆ substitué ou non substitué, à condition que le pigment contienne au moins un groupe NH-CO non substitué.

3. Procédé selon la revendication 1, comprenant une fusion d'arylamines avec une benzoquinone et une oxydation consécutive de l'intermédiaire obtenu en présence d'une base.

4. Procédé selon l'une quelconque des revendications 1 à 3, dans lequel le solvant organique est le diméthylformamide, le diméthylsulfoxyde, la tétraméthylurée, le diméthylacétamide ou la N-méthylpyrrolidone.

5. Procédé selon l'une quelconque des revendications 1 à 3, dans lequel l'oxydation est réalisée par introduction d'air ou d'oxygène, par le chlorate de sodium ou de potassium en présence de peroxyde de vanadium ou par l'hypochlorite de sodium en présence de complexes de manganèse (III) ou par le peroxodisulfate de potassium ou de sodium.
